# EUROPÄISCHE PATENTANMELDUNG

(11) **EP 1 288 100 A2**
(43) Veröffentlichungstag der Anmeldung: **05.03.2003**
(21) Anmeldenummer: 02019263.9
(22) Anmeldetag: 28.08.2002
(51) Int. Cl.: B62B 5/06, A63B 55/08

(54) **Golfwagen mit drehbarem Handgriff**

(30) Priorität: 01.09.2001 DE 10142920
(71) Anmelder: Höffken, Erich, Dr. Ing., 46537 Dinslaken (DE)
(72) Erfinder: Höffken, Erich, Dr. Ing., 46537 Dinslaken (DE)
(74) Vertreter: Schulte, Jörg (DE)

(57) **Zusammenfassung**

Ein Golfwagen 1 für den Transport von diversem Golfzubehör ist mit einem drehbar gelagerten Handgriff 2 ausgerüstet, damit sich der Handgriff 2 dem Golfwagen 1 im Hinblick auf Neigung in Längs- wie Querrichtung anpassen kann. Dabei ist zwischen Handgriff 2 und Führungsstange 5 des Golfwagens 1 ein L- oder T-förmiges Verbindungsbauteil 4 angeordnet, welches starr gegenüber dem Handgriff 2 und drehbar gegenüber der Führungsstange 5 ausgebildet ist.

## Beschreibung

Die Erfindung betrifft einen Golfwagen für den Transport der mit diversem Golfzubehör wie Schlägern, Golfbällen oder Schirmen bestückten Golftasche, die schräg an der zum Fahrgestell gehörenden Führungsstange mit Handgriff angelehnt und lösbar damit und mit dem unteren, im Abstand zueinander angeordnete Laufräder aufweisenden Fahrgestell verbunden ist.

Zum Transport des Golfzubehörs wie Schlägern, Golfbälle, Bekleidung oder Schirmen dienen auch als Bags bezeichnete Golftaschen. Diese werden üblicherweise auf Fahrgestellen, sogenannten Caddies angeordnet und damit über den Platz befördert. Dabei wird der Golfwagen mittels eines Handgriffs gezogen oder geschoben, angetriebene Golfwagen werden am Handgriff geführt.

Der Handgriff am Golfwagen ist nachteiligerweise starr gelagert. Abhängig von der Position des Golfwagens hinsichtlich seiner Neigung beim Ziehen bzw. im Stand einerseits und in der seitlichen Neigung am Hang andererseits muss der Bediener die entsprechenden Höhenunterschiede ausgleichen. Gerade für ältere Spieler stellt diese fehlende Anpassung an die verschiedenen Gegebenheiten des Platzes ein großes Problem dar, zumal diese Beanspruchungen im Rahmen einer Golfrunde über einen längeren Zeitraum wirken und entsprechend Schmerzen verursachen können. Hinzu kommt, dass bei abgestellten Golfwagen der Handgriff sich in einer relativ hohen Position befindet, was dazu führt, dass dieser, um den Golfwagen in die weiter geneigte Ziehposition bringen zu können, zunächst nach unten gezogen oder gedrückt werden muss. Bekannt sind solche Golfwagen, bei denen die Position des Handgriffes in zwei Grundeinstellungen in der Form variiert werden kann, dass beispielsweise eine Schraube gelöst, der Handgriff verstellt und die Schraube anschließend wieder fixiert wird. Von dieser Einstellmöglichkeit kann aber sinnvollerweise nur zu Beginn einer Golfrunde Gebrauch gemacht werden, eine Anpassung an die verschiedenen Positionen eines Golfwagens während der Runde ist hiermit nicht möglich.

Der vorliegenden Erfindung stellt sich daher die Aufgabe, einen Golfwagen zu schaffen, welcher in unterschiedlichen Position gleich gut handhabbar ist.

Diese Aufgabe wird dadurch gelöst, dass der Handgriff drehbar am Golfwagen gelagert ist.

Auf diese Weise ist der Handgriff stets so eingestellt, wie es für den Bediener am zweckmäßigsten ist, indem sich der Handgriff den unterschiedlichen Gegebenheiten während einer Golfrunde anpasst. Sowohl Längs- als auch Querneigungen des Golfwagens in Folge der Unregelmäßigkeiten des Golfplatzes können auch durch eine Art Federwirkung ausgeglichen werden, ohne dass der Bediener dadurch körperlich belastet würde.

Auf besonders zweckmäßige Weise ist dies der Fall, wenn der Handgriff um die Längsachse der Führungsstange drehbar ist. Dabei kann die Drehbarkeit in der Weise gewährleistet sein, dass der Handgriff sich von selbst positioniert oder dass der Handgriff aufgrund einer leichten Drehbewegung des Bedieners einrichtet.

Dies wird am besten realisiert, wenn der Handgriff endlos um die Längsachse der Führungsstange drehbar ist. Denkbar ist es aber auch, etwa durch die Anordnung von einer oder mehreren Federn zu bewirken, dass der Handgriff stets in eine bestimmte gewünschte Position zurückschnellt. Die endlose Drehmöglichkeit des Handgriffs kann hinsichtlich des Drehwiderstands variiert werden, sodass der Golfspieler seinen Wagen den örtlichen Gegebenheiten zu Beginn der Runde oder auch während dieser anpassen kann.

Alternativ zur endlosen Verdrehmöglichkeit wird vorgeschlagen, dass der Handgriff in Raststufen um die Längsachse der Führungsstange drehbar ist, wodurch der Handgriff also nur in bestimmten Winkelpositionen einstellbar wäre. Durch Überwinden eines geringen Rastwiderstands kann diese Einstellung am Handgriff vorgenommen werden.

In einer weiteren Ausführungsform der Erfindung ist vorgesehen, dass zwischen Handgriff und Führungsstange ein L-förmiges oder T-förmiges Verbindungsbauteil vorgesehen ist, welches gegenüber dem Handgriff starr und gegenüber der Führungsstange drehbar ausgebildet ist. Das vorzugsweise aus Metall hergestellte Verbindungsbauteil ist L- oder T-förmig ausgebildet, wobei mindestens ein Schenkel dem Handgriff und mindestens einer direkt oder indirekt der Führungsstange zugeordnet ist. Während das Verbindungsbauteil starr gegenüber dem Handgriff gelagert ist, wird dessen Drehbarkeit aufgrund der Art der Lagerung gegenüber der Führungsstange erreicht.

Um diese Drehbarkeit besonders gut gewährleisten zu können, ist vorgesehen, dass die Führungsstange an ihrem dem Handgriff zugewandten Ende einen Drehkörper aufweist, gegenüber welchem das Verbindungsbauteil drehbar gelagert ist. Der vorzugsweise aus einem elastischen Kunststoff hergestellte Drehkörper weist einen der Führungsstange angepassten, runden oder eckigen Querschnitt auf und wird in diesen eingesetzt. Der Drehkörper verfügt in der Mitte über eine Bohrung, in welche das Verbindungsbauteil zwischen Handgriff und Führungsstange eingesetzt und dort über geeignete Befestigungsmittel fixiert wird. Dabei können die Befestigungsmittel so ausgebildet sein, dass über sie die Drehbarkeit des Handgriffs eingestellt werden kann.

Ergänzend dazu wird vorgeschlagen, dass das Verbindungsbauteil an seinem dem Handgriff abgewandten Ende gegenüber dem Drehkörper über ein Befestigungsmittel fixierbar ist. Dies kann beispielsweise eine Mutter sein, die am dem Handgriff abgewandten Ende des Verbindungsbauteils auf dieses aufgeschraubt wird und über die auf der Drehwiderstand des Handgriffs eingestellt werden kann.

Am anderen, dem Handgriff zugewandten Ende muss der Übergang zwischen Drehkörper und Handgriff so ausgebildet sein, dass die Drehbarkeit des letzteren gewährleistet ist. Daher ist zwischen Drehkörper und Handgriff eine Gleitscheibe angeordnet, sodass der Drehkörper sich gegenüber der Führungsstange verdrehen kann. Die Gleitscheibe weist in ihrer Mitte eine Öffnung auf, die zum Verbindungsbauteil korrespondierend ausgebildet ist.

Mit der vorliegenden Erfindung ist nicht nur an die Ausrüstung neuer Golfwagen sondern auch an die Nachrüstung bereits in Betrieb genommener gedacht. Für diesen Fall kann der erfindungsgemäße drehbare Handgriff Teil eines entsprechend kompakten Bauteils sein. Dies wird für neue wie bereits in Betrieb befindliche Golfwagen erreicht, wenn die Führungsstange an ihrem dem Handgriff zugewandten Ende einen den Drehkörper aufnehmenden Einsatz aufweist, welcher mit der Führungsstange verbindbar ist. Dieser Einsatz wird in die Führungsstange eingesetzt und dort fixiert. Das Drehlager selbst ist Bestandteil dieses Einsatzes, sodass eine Umrüstung eines Golfwagens durch einfachen Austausch des alten Handgriffs gegen den neuen Handgriff mit Einsatz vorgenommen werden kann.

Daher sollte der Einsatz gegenüber der Führungsstange einsteckbar, verrastbar oder verschraubbar sein. Damit kann der Einsatz gegenüber der Führungsstange unabhängig von der drehbaren Lagerung fixiert werden.

Eine besonders praktische Verstellmöglichkeit für den Handgriff ist auch die, bei welcher der Handgriff um eine quer zur Längsachse der Führungsstange angeordnete Achse drehbar ist. Hier ist also das L- oder T-förmige, Handgriff und Führungsstange verbindende Bauteil nicht starr sondern gelenkig im Handgriff angeordnet. Dabei müssen selbstverständlich entsprechende Ausnehmungen und Führungen im Handgriff vorhanden sein, die dessen Neigungsverstellung ermöglichen. Dies ist insbesondere dann sehr nützlich, wenn der abgestellte Golfwagen nach Vollendung des Schlages wieder bedient wird. Bei einer drehbaren Lagerung auch quer zur Längsachse der Führungsstange kann der Handgriff in einer für den Bediener wesentlich angenehmberen Höhe erfasst werden. Beim Ziehen des Golfwagens und der damit verbundenen veränderten Neigung pendelt sich der Handgriff dann aufgrund der Lagerung ideal ein.

Die Erfindung betrifft außerdem einen Handgriff für einen Golfwagen für den Transport der mit diversem Golfzubehör wie Schlägern, Golfbällen oder Schirmen bestückten Golftasche, die schräg an der zum Fahrgestell gehörenden Führungsstange mit Handgriff angelehnt und lösbar damit und mit dem unteren, im Abstand zueinander angeordnete Laufräder aufweisenden Fahrgestell verbunden ist, wobei der Handgriff drehbar am Golfwagen gelagert ist. Hierbei ist insbesondere an das Nachrüsten von bereits in Betrieb genommenen, auch angetriebenen Golfwagen gedacht, die zur Erhöhung des Bedienkomforts mit dem erfindungsgemäßen Handgriff auch nachträglich ausgestattet werden können.

Die Erfindung zeichnet sich insbesondere dadurch aus, dass ein Handgriff für einen Golfwagen geschaffen ist, der sich den Neigungen des Golfwagens während seines Einsatzes ideal anpasst, weil sich die Muskulatur des Armes beim Ziehen des Wagens nicht wie bei einem starren Handgriff verspannt. Vielmehr passt sich der Drehgriff an die jeweilige zufällige Handstellung an und zwar sowohl im Hinblick auf die Neigung des Golfwagens in Längs- als auch in Querrichtung.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Golfwagen in Seitenansicht und
- Figur 2: einen Handgriff, teilweise im Schnitt.

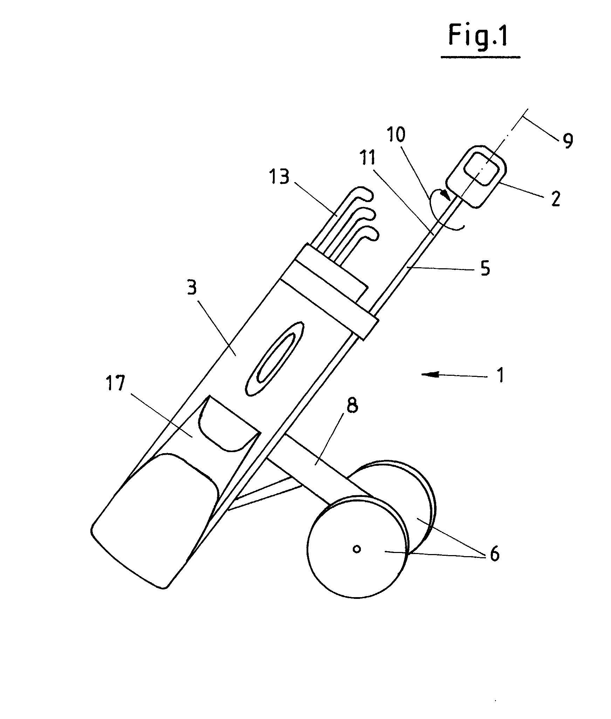

Figur 1 zeigt einen Golfwagen 1 mit dem Fahrgestell 8, an das die Golftasche 3 angelehnt und mit diesem lösbar verbunden ist. Das Fahrgestell weist zwei im Abstand zueinander angeordnete Laufräder 6 auf. Die Golftasche 3 ist hier beispielhaft mit Golfschlägern 13 und weiteren, in den Taschen 17 verstautem Zubehör ausgerüstet. An der Führungsstange 5, genauer gesagt an deren oberen Ende 11 ist der Handgriff 2 zu erkennen. Mit dem Pfeil 10 ist angedeutet, dass der Handgriff 2 drehbar um die Längsachse 9 der Führungsstange 5 ausgebildet ist.

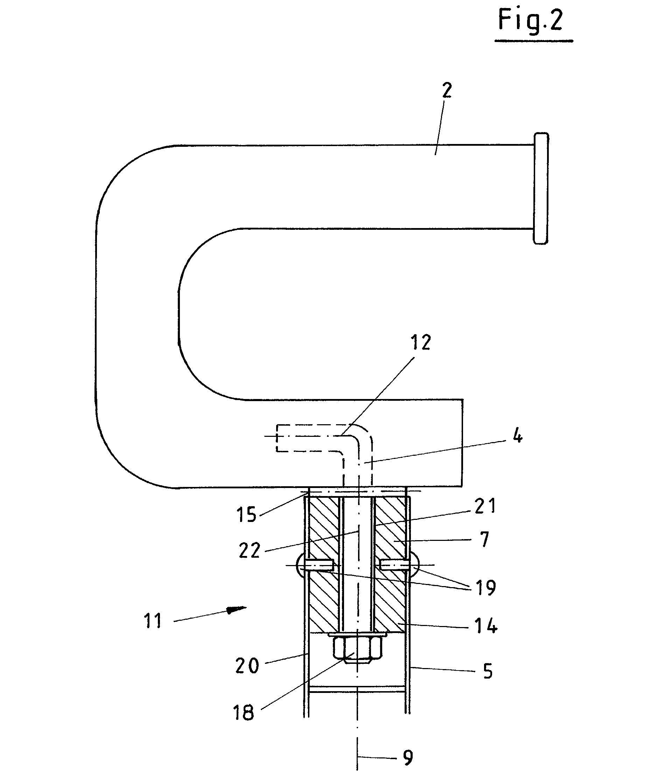

Figur 2 zeigt den Handgriff 2 und seinen Anschluss an das obere Ende 11 der Führungsstange 5 detallierter. Am oberen Ende 11 der Führungsstange 5 ist hier der Einsatz 20 zu erkennen, welcher, ein Teil der Führungsstange 5 bildend gegenüber dieser eingesteckt, verrastet oder verschraubt ist. Der Einsatz 20 nimmt einen Drehkörper 7 auf, der seinerseits in der Bohrung 21 das hier L-förmig ausgebildete Verbindungsbauteil 4 aufnimmt. Das Verbindungsbauteil 4 ist in dieser Darstellung gegenüber dem Handgriff 2 starr gelagert und kann demzufolge nicht um die Achse 12 gedreht werden. Es ist aber ebenso denkbar, dass hier eine Drehbarkeit vorhanden ist, wobei dann nicht dargestellte Ausnehmungen im Handgriff 2, die diese Drehbarkeit gewährleisten, vorhanden sein müssten. Der Handgriff 2 ist um die Längsachse 9 der Führungsstange 5 drehbar, die mit der Achse 22 des L-förmigen Bauteils zusammenfällt. Zur Verbesserung der Drehbarkeit ist zwischen Drehkörper 7 und Führungsstange bzw. Handgriff 2 eine Gleitscheibe 15 angeordnet. An seinem dem Handgriff 2 abgewandten Ende 14 ist das Verbindungsbauteil 4 mit einem Befestigungsmittel, hier einer Mutter 18 fixiert, über die ebenso wie beispielsweise über ein Spiel im Bereich des Übergangs zwischen Drehkörper 7 und Verbindungsbauteil 4 der Widerstand im Hinblick auf das Drehen um die Längsachse 9 der Führungsstange 5 eingestellt werden kann. Befestigungsmittel 19 dienen zum Fixieren des Drehkörpers 7 gegenüber dem Einsatz 20 bzw. der Führungsstange 5.

Alle genannten Merkmale, auch die den Zeichnungen allein zu entnehmenden, werden allein und in Kombination als erfindungswesentlich angesehen.

## Patentansprüche

1. Golfwagen (1) für den Transport der mit diversem Golfzubehör wie Schlägern, Golfbällen oder Schirmen bestückten Golftasche (3), die schräg an der zum Fahrgestell (8) gehörenden Führungsstange (5) mit Handgriff (2) angelehnt und lösbar damit und mit dem unteren, im Abstand zueinander angeordnete Laufräder (6) aufweisenden Fahrgestell (4) verbunden ist,
**dadurch gekennzeichnet,**
**dass** der Handgriff (2) drehbar am Golfwagen (1) gelagert ist.

2. Golfwagen nach Anspruch 1,
**dadurch gekennzeichnet,**
**dass** der Handgriff (2) um die Längsachse (9) der Führungsstange (5) drehbar ist.

3. Golfwagen nach Anspruch 2,
**dadurch gekennzeichnet,**
**dass** der Handgriff (2) endlos um die Längsachse (9) der Führungsstange (5) drehbar ist.

4. Golfwagen nach Anspruch 2,
**dadurch gekennzeichnet,**
**dass** der Handgriff (2) in Raststufen um die Längsachse (9) der Führungsstange (5) drehbar ist.

5. Golfwagen nach Anspruch 2,
**dadurch gekennzeichnet,**
**dass** zwischen Handgriff (2) und Führungsstange (5) ein L-förmiges oder T-förmiges Verbindungsbauteil (4) vorgesehen ist, welches gegenüber dem Handgriff (2) starr und gegenüber der Führungsstange (5) drehbar ausgebildet ist.

6. Golfwagen nach Anspruch 5,
**dadurch gekennzeichnet,**
**dass** die Führungsstange (5) an ihrem dem Handgriff (2) zugewandten Ende (11) einen Drehkörper (7) aufweist, gegenüber welchem das Verbindungsbauteil (4) drehbar gelagert ist.

7. Golfwagen nach Anspruch 6,
**dadurch gekennzeichnet,**
**dass** das Verbindungsbauteil (4) an seinem dem Handgriff (2) abgewandten Ende (14) gegenüber dem Drehkörper (7) über ein Befestigungsmittel (18) fixierbar ist.

8. Golfwagen nach Anspruch 7,
**dadurch gekennzeichnet,**
**dass** zwischen Drehkörper (7) und Handgriff (2) eine Gleitscheibe (15) angeordnet ist.

9. Golfwagen nach mindestens einem der vorhergehenden Ansprüche,
**dadurch gekennzeichnet,**
**dass** die Führungsstange (5) an ihrem dem Handgriff (2) zugewandten Ende (11) einen den Drehkörper (7) aufnehmenden Einsatz (20) aufweist, welcher mit der Führungsstange (5) verbindbar ist.

10. Golfwagen nach Anspruch 9,
**dadurch gekennzeichnet,**
**dass** der Einsatz (20) gegenüber der Führungsstange (5) einsteckbar, verrastbar oder verschraubbar ist.

11. Golfwagen nach Anspruch 2,
**dadurch gekennzeichnet,**
**dass** der Handgriff (2) um eine quer zu Längsachse (9) der Führungsstange (5) angeordnete Achse (12) drehbar ist.

12. Handgriff (2) für einen Golfwagen (1) für den Transport der mit diversem Golfzubehör wie Schlägern, Golfbällen oder Schirmen bestückten Golftasche (3), die schräg an der zum Fahrgestell (4) gehörenden Führungsstange (5) mit Handgriff (2) angelehnt und lösbar damit und mit dem unteren, im Abstand zueinander angeordnete Laufräder (6,7) aufweisenden Fahrgestell (4) verbunden ist,
**dadurch gekennzeichnet,**
**dass** der Handgriff (2) drehbar am Golfwagen (1) gelagert ist.
